# EUROPEAN PATENT APPLICATION

(11) **EP 3 259 986 A1**
(43) Date of publication of application: **27.12.2017**
(21) Application number: 17175909.5
(22) Date of filing: 14.06.2017
(51) Int. Cl.: A01M 7/00, A01B 73/04

(54) **BOOM ARRANGEMENT AND METHOD FOR ADJUSTING THE TILT POSITION OF THE BOOM ARRANGEMENT**

(30) Priority: 21.06.2016 FI 20165511
(71) Applicant: W-Cult Oy, 29100 Luvia (FI)
(72) Inventor: Weckman, Markku, 29100 Luvia (FI)
(74) Representative: Papula Oy

(57) **Abstract**

A boom arrangement (1) having a hydraulic system (10) comprising an electrically controlled first shutoff valve (19) arranged in a first pipeline (17), an electrically controlled second shutoff valve (20) arranged in the first pipeline (17), a first bypass pipeline (21) connected to the first pipeline (17) for bypassing the first shutoff valve (19), a first check valve (22) arranged in the first bypass pipeline (21), a second bypass pipeline (23) connected to the first pipeline (17) for bypassing the second shutoff valve (20), and a second check valve (24) arranged in the second bypass pipeline (23). An electric operating switch (25, 26) is arranged in the cab of the work machine to be operated by the driver of the work machine, for opening and closing the electrically controlled first shutoff valve (19) and second shutoff valve (20). In the method, the hydraulic system (10) is operated as a closed circuit, successive pulses of hydraulic fluid flow are generated, either the first (11) or the second shutoff valve (14) is closed, such that the flow of hydraulic fluid runs in only one direction in the first pipeline (17) through the bypass flow channel (21 or 23) bypassing the shutoff valve that is closed, the check valve (22 or 24) in said bypass flow channel preventing the fluid flow in the opposite direction, whereby the side booms (6, 8) are turned, and the closed first shutoff valve (19) or second shutoff valve (20) is opened, or both of the shutoff valves are closed, when the side booms have turned to the desired tilt angle.

## Description

### FIELD OF THE INVENTION

The invention relates to a boom arrangement as defined in the preamble of claim 1. Further, the invention relates to a method according to claim 11.

### BACKGROUND OF THE INVENTION

Boom arrangements adapted for connection to a supplementary equipment connection of a work machine are known in the prior art. During use, the boom arrangement extends substantially transversely relative to the forward moving direction of the work machine. These types of boom arrangements are used for example as spraying booms. The boom arrangement includes a centre body having connection means which are releasably connectable to the supplementary equipment connection of the work machine such that the centre body is substantially rigidly attached relative to the work machine, so that the centre body follows the swaying of the work machine. A first side boom on a first side of the centre body is pivotably mounted to the centre body to turn in the vertical direction about a first joint. A second side boom is identical to the first side boom and is provided on a second side of the centre body symmetrically relative to the first side boom. The second side boom is pivotably mounted to the centre body to turn in the vertical direction about a second joint. Further, the boom arrangement includes a hydraulic system for controlling the movements of the side booms. The hydraulic system includes a double-acting first hydraulic cylinder arranged between the centre body and the first side boom for turning the first side boom. A double-acting second hydraulic cylinder is arranged between the centre body and the second side boom for turning the second side boom. A first pipeline connects a first side of the first hydraulic cylinder in fluid communication with a corresponding third side of the second hydraulic cylinder. A second pipeline connects a second side of the first hydraulic cylinder in fluid communication with a corresponding fourth side of the second hydraulic cylinder.

When using the boom arrangement, the aim is typically to keep it at a suitable height relative to the cultivated plants or the ground surface, despite the fact that the work machine, generally an agricultural tractor, tends to sway and tilt during driving due to the irregularities of the ground surface. In case of driving on a field, the tractor may also have to drive such that a wheel on one side runs in a longitudinal depression, such as a furrow, so that the work machine moves in a slanted position, and also the boom arrangement would be in an undesirable position, if the position of its side booms was not adjusted.

Complicated and expensive hydraulic systems are known in the prior art for adjusting the position of the side booms in a dynamic driving situation. Such control systems require diverse position and distance sensors, logic control and continuous operation of the work machine by means of hydraulics, or that the system must have several external pairs of hydraulic connections to provide the adjusting and stabilizing functions. The complex boom position control systems are expensive and prone to damaging.

### OBJECTIVE OF THE INVENTION

The objective of the invention is to remedy the defects described above.

Specifically, the objective of the invention is to disclose a simple and inexpensive electro-hydraulic system for adjusting the position of the side booms.

### SUMMARY OF THE INVENTION

The boom arrangement according to the invention is characterized by the features presented in claim 1. The method according to the invention is characterized by the features presented in claim 11.

According to the invention, the hydraulic system comprises
- an electrically controlled first shutoff valve arranged in a first pipeline, which in an open state allows, and in a closed state prevents the flow of hydraulic fluid to a first side and, correspondingly, from the first side of a first hydraulic cylinder,
- an electrically controlled second shutoff valve arranged in the first pipeline, which in an open state allows the flow of hydraulic fluid to a third side and, correspondingly, from the third side of a second hydraulic cylinder,
- a first bypass pipeline connected to the first pipeline for bypassing the first shutoff valve, such that when the first shutoff valve is closed, the flow of hydraulic fluid is directed through the first bypass pipeline,
- a first check valve arranged in the first bypass pipeline for allowing the flow of hydraulic fluid to the first side of the first hydraulic cylinder and for preventing the flow in the opposite direction,
- a second bypass pipeline connected to the first pipeline for bypassing the second shutoff valve, such that when the second shutoff valve is closed, the flow of hydraulic fluid is directed through the second bypass pipeline, and
- a second check valve arranged in the second bypass pipeline for allowing the flow of hydraulic fluid to run to the third side of the second hydraulic cylinder and for preventing the flow in the opposite direction. The boom arrangement comprises at least one electric operating switch arranged in the cab of the work machine to be operated by the driver of the work machine, for opening and closing the electrically controlled first shutoff valve and second shutoff valve.

The advantage of the invention is that the hydraulic system can be used separately from the hydraulics of the work machine as a closed circuit, so that it can be used for so-called passive position adjustment of the side booms by using successive pulses of fluid flow generated in said closed circuit. Additionally, the system can be set in a so-called free floating state where the swaying of the work machine is not transmitted through the centre body into the movements of the side booms. Further, it is an advantage that the hydraulic system enables separate adjustment of the position of the side booms independent of each other by using the control of the work machine's external hydraulics.

In one embodiment of the boom arrangement, the hydraulic system comprises a third shutoff valve arranged in the first bypass pipeline, and a fourth shutoff valve arranged in the second bypass pipeline.

In one embodiment of the boom arrangement, the first pipeline and a second pipeline are connected to a double-acting hydraulic connection of the work machine's external hydraulics for operating the first hydraulic cylinder and/or the second hydraulic cylinder by means of the work machine's hydraulics.

In one embodiment of the boom arrangement, the boom arrangement comprises a first extension spring device arranged to operate between the centre body and a first side boom, and a second extension spring device which is identical to the first extension spring device and arranged to operate between the centre body and a second side boom.

In one embodiment of the boom arrangement, the first side boom and the second side boom consist of two or more boom sections that are foldable relative to each other.

In one embodiment of the boom arrangement, the first side boom comprises a first boom section pivotably mounted to the centre body to turn in the vertical direction about said first joint, and a second boom section pivotably mounted by a third joint to the end of the first boom section to turn between an extended position and a folded position. In the extended position the first and the second boom sections are aligned end against end, one after the other. In the folded position the second boom section is folded next to the first boom section.

In one embodiment of the boom arrangement, the second side boom comprises a third boom section pivotably mounted to the centre body to turn in the vertical direction about said second joint, and a fourth boom section pivotably mounted by a fourth joint to the end of the third boom section to turn between the extended position and the folded position. In the extended position the third and the fourth boom sections are aligned end against end, one after the other. In the folded position the fourth boom section is folded next to the third boom section.

In one embodiment of the boom arrangement, the boom arrangement comprises a crank pivotably mounted to the centre body to turn about a fifth joint, and a power device operated turning mechanism for turning the crank back and forth. The first hydraulic cylinder and the second hydraulic cylinder are pivotably mounted to the crank at a distance from the fifth joint.

In one embodiment of the boom arrangement, the boom arrangement comprises a plurality of cutting devices, such as trimmers, arranged over the width of the boom arrangement.

In one embodiment of the boom arrangement, the boom arrangement comprises a plurality of spraying nozzles arranged over the width of the boom arrangement for spraying liquid.

In the method for adjusting the tilt position of the first side boom and the second side boom of the boom arrangement attached to a work machine, the hydraulic system is operated as a closed circuit. Successive pulses of hydraulic fluid flow are generated in the hydraulic system. Either the first shutoff valve or the second shutoff valve is closed, the other one remaining in the open state, whereby the flow of hydraulic fluid runs in only one direction in the first pipeline through the bypass flow channel bypassing the shutoff valve that is closed, the check valve in said bypass flow channel preventing the fluid flow in the opposite direction, such that the side booms are turned. The closed first shutoff valve or the second shutoff valve is opened, or both of the shutoff valves are closed, when the side booms have turned to the desired tilt angle.

In one embodiment of the method, the work machine is driven on an uneven ground surface, such as a field, such that the work machine and thereby the centre body is tilting, whereby the pulses of flow of the hydraulic fluid in the hydraulic system are generated from the movements of the work machine, as the moment of inertia of the side booms prevents/delays them from following the sudden movements of the centre body, whereby successive swaying in different directions generates said pulses of hydraulic fluid flow through movement of the piston rods of the first and the second hydraulic cylinders. This way the driver of the work machine can, by operating the electric switch in the cab, open and close the first and the second shutoff valves and provide simultaneous adjustment of the tilt position of the booms in the desired direction.

In one embodiment of the method, the swaying of the work machine is intensified by means of a band installed at one or more positions of the tyre of the work machine or by adjusting the inflation pressure of the tyres.

In one embodiment of the method, pulses of flow of the hydraulic fluid are generated mechanically by moving the fixing points of the first and the second hydraulic cylinders back and forth relative to the centre body, or by making quick boom adjustment movements back and forth.

### LIST OF FIGURES

In the following, the invention will be described in detail by means of examples of its embodiments, with reference to the accompanying drawing in which
Fig. 1 shows a side view of one embodiment of the boom arrangement according to the invention installed on a front end loader of an agricultural tractor,
Fig. 2 shows the boom arrangement of Fig. 1 seen in the direction II-II of Fig. 1 without the tractor,
Fig. 3 shows the boom arrangement of Fig. 2 in a folded state,
Fig. 4 shows one embodiment of a detail of the boom arrangement, wherein hydraulic cylinders are connected to a centre body by means of a turnable crank,
Fig. 5 shows one embodiment of the boom arrangement, wherein the boom arrangement is provided with a plurality of cutting devices,
Fig. 6 shows one embodiment of the boom arrangement, wherein the boom arrangement is provided with a plurality of spraying nozzles,
Fig. 7-10 schematically show the boom arrangement according to the invention when using a hydraulic system according to the method according to the invention for simultaneous adjustment of the tilt position of side booms,
Fig. 11-14 show the hydraulic system of the boom arrangement set in a so-called floating operating state,
Fig. 15 and 16 show the hydraulic system of the boom arrangement set in an operating state where it is possible to simultaneously lift and lower the side booms by means of external hydraulics, and
Fig. 17-20 show the hydraulic system of the boom arrangement set in an operating state where separate position adjustment of the side booms can be provided by means of external hydraulics.

### DETAILED DESCRIPTION OF THE INVENTION

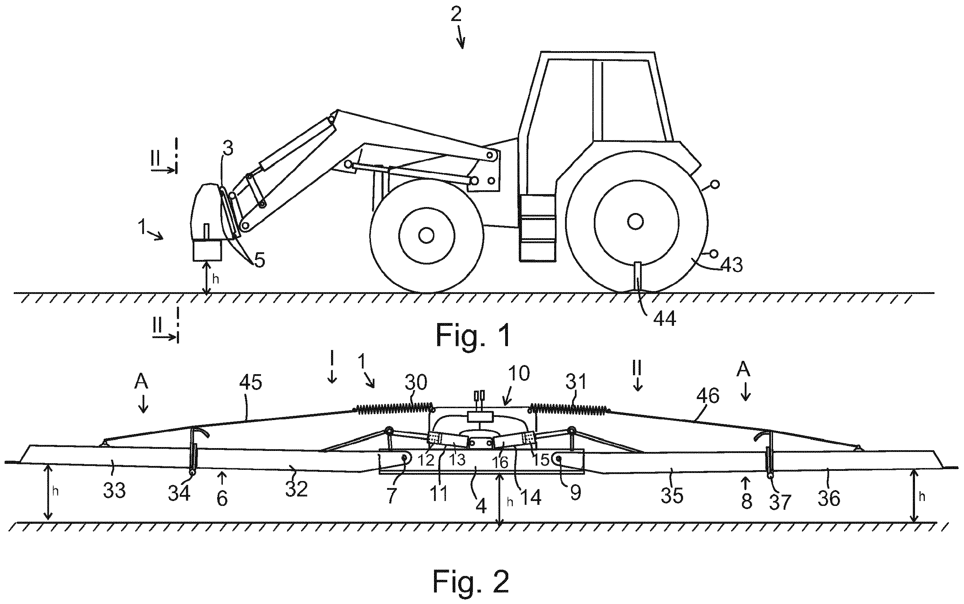

Fig. 1 shows a side view of a boom arrangement 1 attached to a work machine 2. The work machine 2 is an agricultural tractor provided with front end loader arms, their ends having a supplementary equipment connection 3, i.e. a work tool quick coupler, to which the foldable boom arrangement 1 is attached. The height position of the boom arrangement 1 can be adjusted by lifting and lowering the arms of the from end loader.

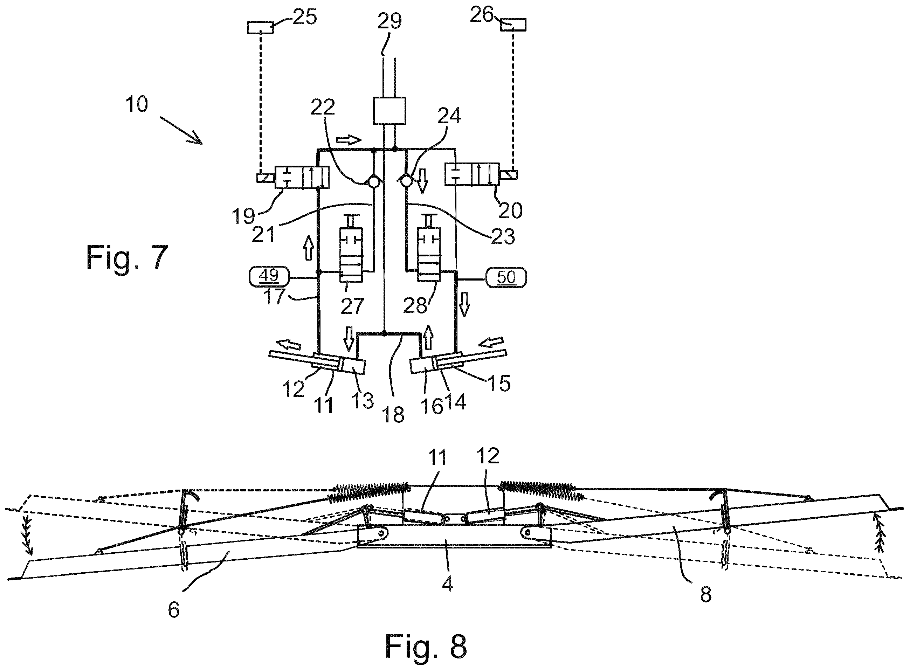

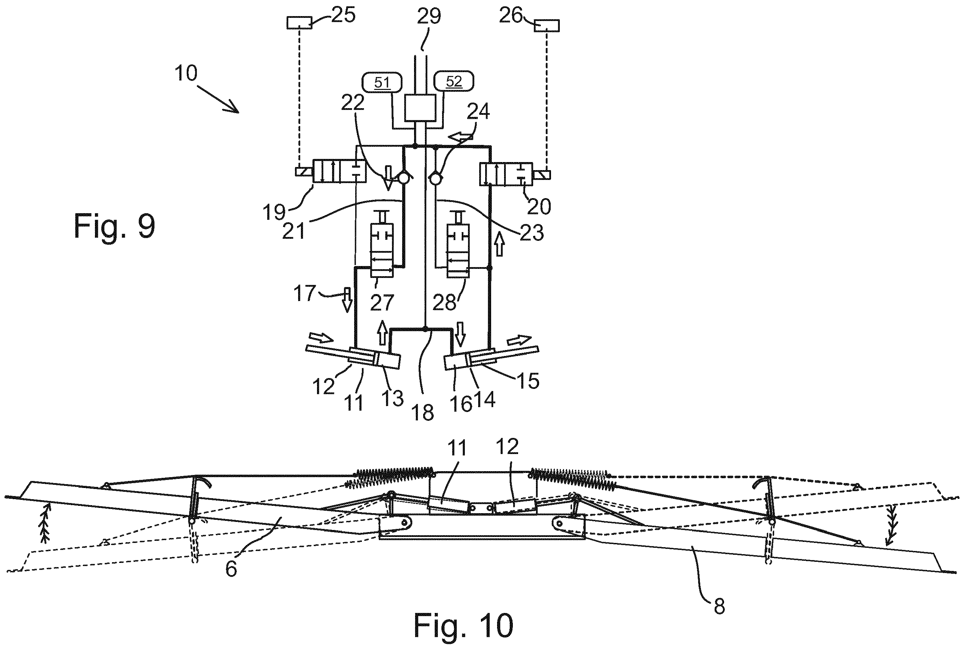

Fig. 2 shows that during use the boom arrangement extends substantially transversely relative to the forward moving direction of the work machine 2. The boom arrangement 1 comprises a centre body 4 having connection means 5 which are releasably connectable to the supplementary equipment connection 3 of the work machine, such that the centre body 4 is substantially rigidly attached relative to the work machine 2, whereby the centre body 4 follows the swaying of the work machine 2. This swaying is used as described with reference to Fig. 7 and 9 above to adjust the tilt position of the booms. Further, the boom arrangement 1 comprises a first side boom 6 on a first side I of the centre body 4 (in the figure on the left side). The first side boom 6 is pivotably mounted to the centre body to turn in the vertical direction about a first joint 7. A second side boom 8 is identical to the first side boom. The second side boom 8 is positioned on a second side II of the centre body 4 (in the figure on the right side) symmetrically relative to the first side boom 6. The second side boom 8 is pivotably mounted to the centre body 4 to turn in the vertical direction about a second joint 9. Further, the boom arrangement 1 comprises a hydraulic system 10 for controlling the movements of the side booms 6 and 8. The hydraulic system 10 comprises a double-acting first hydraulic cylinder 11 arranged between the centre body 4 and the first side boom 6 for turning the first side boom. The first hydraulic cylinder 11 has a first side 12 on the side of the piston rod, and a second side 13 opposite to the side of the piston rod. The hydraulic system 10 also comprises a double-acting second hydraulic cylinder 14 arranged between the centre body 4 and the second side boom 8 for turning the second side boom. The second hydraulic cylinder 14 has a third side 15 on the side of the piston rod, and a fourth side 16 opposite to the side of the piston rod. Other structures and functions of the hydraulic system 10 are described with reference to the description of Fig. 7-20 above.

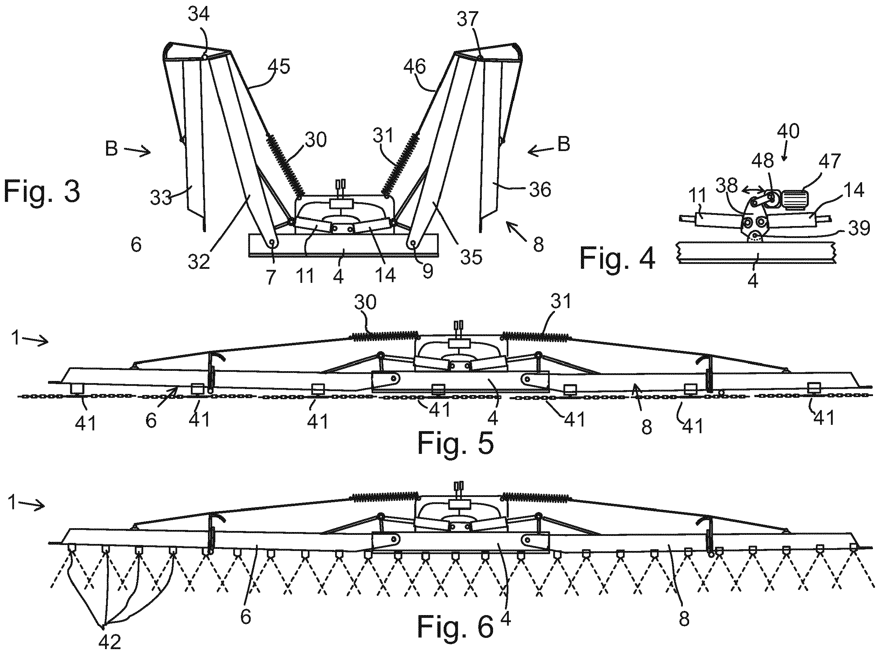

Still referring to Fig. 2, a first extension spring device 30 is arranged to operate between the centre body 4 and the first side boom 6. Correspondingly, a second extension spring device 31 which is identical to the first extension spring device is arranged to operate between the centre body 4 and the second side boom 8. The first side boom 6 and the second side boom 8 consist of two or more boom sections that are foldable relative to each other.
The first side boom 6 comprises a first boom section 32 pivotably mounted to the centre body 4 to turn in the vertical direction about the first joint 7. The first side boom 6 also comprises a second boom section 33 pivotably mounted by a third joint 34 to the end of the first boom section 32 to turn between an extended position A (Fig. 2) and an up-folded position B illustrated in Fig. 3. In the extended position A the first and the second boom sections 32, 33 are aligned end against end, one after the other. In the folded position B the second boom section 33 is folded next to the first boom section 32.

Correspondingly, the second side boom 8 comprises a third boom section 35 pivotably mounted to the centre body 4 to turn in the vertical direction about said second joint 9. Further, the second side boom 8 comprises a fourth boom section 36 pivotably mounted by a fourth joint 37 to the end of the third boom section 35 to turn between the extended position A (Fig. 2) and the up-folded position B (Fig. 3). In the extended position A the third and the fourth boom sections 35, 36 are aligned end against end, one after the other. In the folded position B the fourth boom section 36 is folded next to the third boom section 35. The up-folded position B is a transport position in which the boom arrangement has a suitable width so that driving on the road in traffic is possible.

With reference to Fig. 2 and 3, the first extension spring device 30 is at one end pivotably mounted to the centre body 4. The other end of the extension spring device 30 is connected to a first end of a first wire 45. A second end of the first wire 45 is connected to the second boom section 33. Correspondingly, the second extension spring device 31 is at one end pivotably mounted to the centre body 4. The other end of the extension spring device 31 is connected to a first end of a second wire 46. A second end of the second wire 46 is connected to the fourth boom section 36. When starting to lift the side booms 6 and 8 from the extended position A, the side booms 6, 8 begin to fold at their intermediate joints 34, 37 when they are lifted by the hydraulic cylinders 11, 14 above the normal work positions, so that the spring devices 30, 31 relax, and the wires 45, 46 begin after a certain lifting angle to lower the outermost boom sections 33, 36 towards the transport position.

The wires 45, 46 can be replaced by rigid rod mechanisms with wide angle joints at the boom joints 34, 37. The extension spring devices 30, 31 may also be located inside the rod mechanisms having a telescopic construction at the ends on the side of the centre body 4.

Fig. 4 shows an arrangement by means of which the fixing points of the first hydraulic cylinder 11 and the second hydraulic cylinder 14 can be mechanically moved back and forth and pulses of fluid flow generated in the hydraulic system 10. A crank 38 is pivotably mounted to the centre body 4 to turn about a fifth joint 39. A power device operated turning mechanism 40 is arranged for turning the crank 38 back and forth. The first hydraulic cylinder 11 and the second hydraulic cylinder 14 are pivotably mounted to the crank 38 at a distance from the fifth joint 39. The turning mechanism 40 may comprise, for example, an eccentric crank mechanism 48 rotatable by means of an electric motor 47, which is connected to the crank 38.

Fig. 5 shows an embodiment wherein the boom arrangement 1 is arranged as a cutting device. In this case the boom arrangement 1 comprises a plurality of cutting devices 41, such as trimmers or the like, arranged over the width of the boom arrangement 1. This type of device can be used for cutting the inflorescence of weeds above the useful plants. The essential feature during operation is that the cutting device can be kept precisely at a suitable height above the useful plants, so that no useful plants are cut, but only the inflorescence of weeds extending above them, which prevents their propagation.

Fig. 6 shows an embodiment wherein the boom arrangement 1 comprises a plurality of spraying nozzles 42 arranged over the width of the boom arrangement 1 for spraying liquid, such as a herbicide. The essential feature during operation is that the cutting device can be kept precisely at a suitable height from the ground surface to obtain a sufficient spraying coverage.

Fig. 7, 9, 11, 13, 15-20 show a schematic representation of the hydraulic system 10 of the boom arrangement 1. The first side 12 of the first hydraulic cylinder 11 is connected in fluid communication with the third side 15 of the second hydraulic cylinder 14 by a first pipeline 17. The second side 13 of the first hydraulic cylinder 11 is connected in fluid communication with the fourth side 16 of the second hydraulic cylinder 14 by a second pipeline 18. An electrically controlled first shutoff valve 19 is arranged in the first pipeline 17. The first shutoff valve 19 in an open state allows, and in a closed state prevents the flow of hydraulic fluid to the first side 12 and, correspondingly, from the first side 12 of the first hydraulic cylinder 11. An electrically controlled second shutoff valve 20 is arranged in the first pipeline 17. The second shutoff valve 20 in an open state allows the flow of hydraulic fluid to the third side 15 and, correspondingly, from the third side 15 of the second hydraulic cylinder 14. A first bypass pipeline 21 is connected to the first pipeline 17 for bypassing the first shutoff valve 19, such that when the first shutoff valve 19 is closed, the flow of hydraulic fluid is directed through the first bypass pipeline 21. A first check valve 22 is arranged in the first bypass pipeline 21 for allowing the flow of hydraulic fluid to the first side 12 of the first hydraulic cylinder 12 and for preventing the flow in the opposite direction. A second bypass pipeline 23 is connected to the first pipeline 17 for bypassing the second shutoff valve 20, such that when the second shutoff valve 20 is closed, the flow of hydraulic fluid is directed through the second bypass pipeline 28. A second check valve 24 is arranged in the second bypass pipeline 23 for allowing the flow of hydraulic fluid to run to the third side 15 of the second hydraulic cylinder 14 and for preventing the flow in the opposite direction.

At least one electric operating switch 25, 26 is arranged in the cab of the work machine 2 to be operated by the driver of the work machine, for opening and closing the electrically controlled first shutoff valve 19 and second shutoff valve 20.

A third shutoff valve 27 which may be electrically controlled or manual is arranged in the first bypass pipeline 21. A fourth shutoff valve 28 which may be electrically controlled or manual is arranged in the second bypass pipeline 23. The first pipeline 17 and the second pipeline 18 are connected to a double-acting hydraulic connection of the work machine's external hydraulics 29 for operating the first hydraulic cylinder 11 and/or the second hydraulic cylinder 14 by means of the work machine's hydraulics.

Fig. 7-10 illustrate the method according to the invention of the boom arrangement 1 for adjusting the tilt position of the first side boom 6 and the second side boom 8. Adjustment of the tilt position is needed when the work machine drives in a tilted position, the wheels on one side rolling in a longitudinal depression, such as a furrow. In this case, also the centre body 4 fixedly connected to the work machine is in a tilted position, but the side booms 6 and 8 should be, e.g., in a horizontal position for cutting or spraying. In this case, the hydraulic system 10 is operated as a closed circuit without using external feed of the hydraulic fluid from the work machine's hydraulics 29. Successive pulses of hydraulic fluid flow are generated in the hydraulic system 10. Either the first shutoff valve 11 (as in Fig. 7) or the second shutoff valve 14 (as in Fig. 9) is closed, the other one remaining in the opened state. In this case, the flow of hydraulic fluid runs in only one direction in the first pipeline 17 through the bypass flow channel 21 or 23 bypassing the shutoff valve that is closed, the check valve 22 or 24 in said bypass flow channel preventing the fluid flow in the opposite direction, whereby the side booms 6, 8 are turned at equal angles. Finally, the closed first shutoff valve 11 or second shutoff valve 14 is opened when the side booms have turned to the desired tilt angle. In Fig. 7 the first shutoff valve 19 is open and the second shutoff valve 20 is closed such that, as illustrated in Fig. 8, the first side boom 6 is turning down and the second side boom 8 is turning up. In Fig. 9 the first shutoff valve 19 is closed and the second shutoff valve 20 is open such that, as illustrated in Fig. 10, the first side boom 6 is turning up and the second side boom 8 is turning down. In the mode of operation of Fig. 7-10 the third shutoff valve 27 in the first bypass pipeline 21 and the fourth shutoff valve 28 in the second bypass pipeline 23 are opened.

When working on a field on an uneven ground surface, the work machine 1 and thereby the centre body 4 are swaying, whereby the pulses of flow of the hydraulic fluid in the hydraulic system 10 are generated from the swaying of the work machine, as the moment of inertia of the side booms 6, 8 prevents/delays them from following the sudden swaying movements of the centre body 4, such that the successive swaying in different directions generates, through movement of the piston rods of the first and the second hydraulic cylinders 11, 14, said pulses of hydraulic fluid flow by means of which the turning of the side booms 6, 8 as described above is provided. With reference to Fig. 1, the swaying of the work machine 2 for generating the above-mentioned pulses of flow of the hydraulic fluid can be intensified by installing a band 44 at one or more positions of a tyre 43 of the work machine, or by adjusting the inflation pressure of the tyres.

Alternatively, or in addition to the above-mentioned modes, pulses of flow of the hydraulic fluid can be generated artificially for example by mechanically moving the fixing points of the first and the second hydraulic cylinders 11, 14 back and forth relative to the centre body 4 by means of the arrangement of Fig. 4.

By adding a hydraulic accumulator 51 (Fig. 9) in the first pipeline 17, in the pipe section between the shutoff valves 19 and 20, and another hydraulic accumulator 52 in the second pipeline 18, the fluid pulses activating the tilt function of the boom arrangement can also be generated from the up - down movements of the work machine. In addition to the irregularities of the terrain and the tyres, vertical movements can be created by quick height adjustment movements of the work machine back and forth.

In addition to the fluid pulse adjustment mode as described above, the hydraulic system 10 also enables other functions.

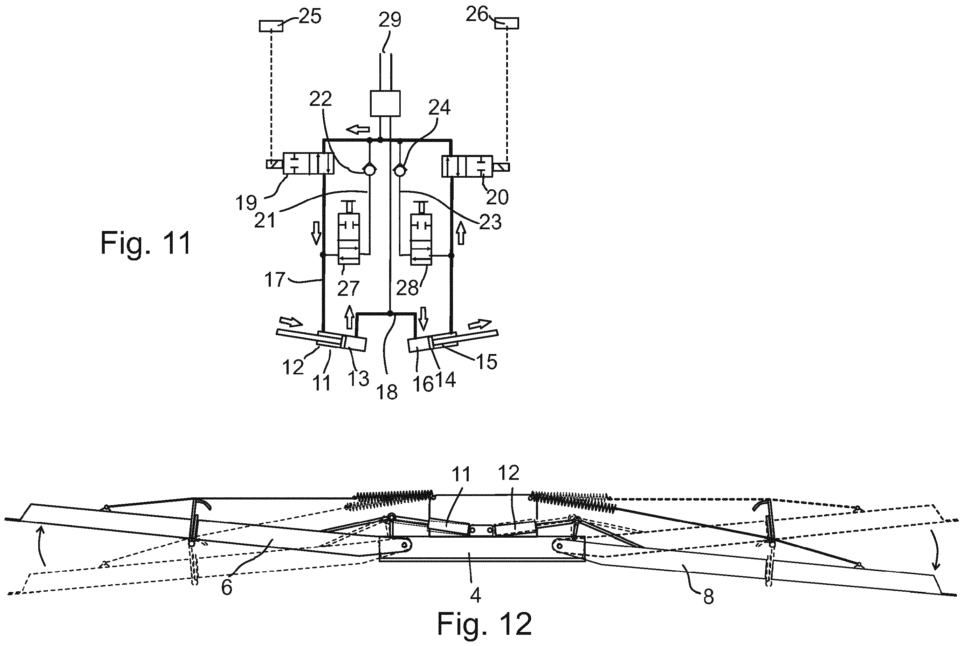

A so-called floating mode of operation illustrated in Fig. 11-14 is used when driving on a substantially horizontal surface. In the floating mode of operation the first shutoff valve 19 and the second shutoff valve 20 are both opened, such that the hydraulic fluid is able to flow in the first pipeline 17 and the second pipeline 18 freely in both directions. When driving on a field, a tyre on one side of the work machine often drives over a protuberance, such as a rock, or alternatively into a hole. When this happens the work machine 1 takes a sudden tilt and then immediately straightens up, and the centre body 4 of the boom arrangement fixedly connected to the work machine does the same. In the floating mode of operation, however, the side booms 6 and 8 do not follow the swaying of the centre body 4 due to their moment of inertia, but remain substantially in the same position as before the swaying. This way, while the centre body 4 is tilting from side to side, the position of the side booms 6, 8 relative to the ground surface still remains stable.

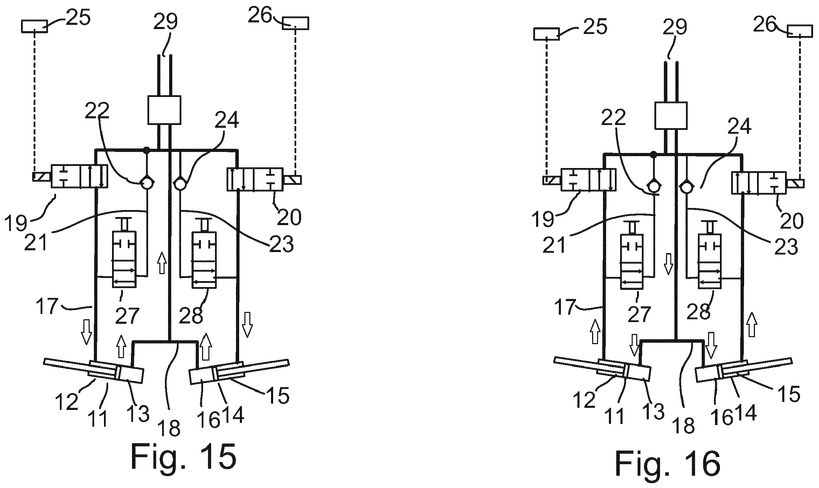

Fig. 15 and 16 show that by using the work machine's hydraulics 29 and both electrically controlled shutoff valves 19 and 20 being open, both of the side booms 6, 8 can be simultaneously lifted (Fig. 15) or lowered (Fig. 16), depending on the feed direction of the external hydraulics.

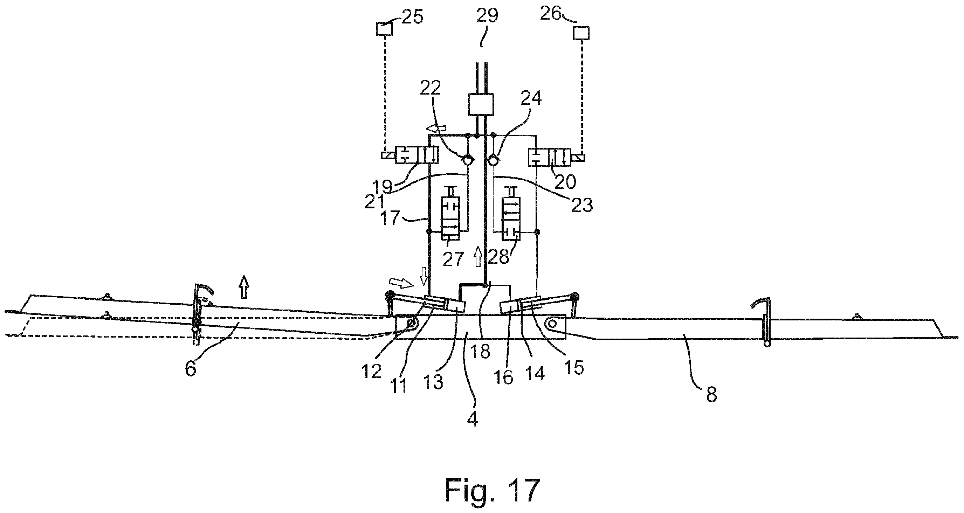

Fig. 17 - 20 illustrate yet another mode of operation enabled by the hydraulic system 10, i.e. separate control of the tilt of the side booms 6 and 8.

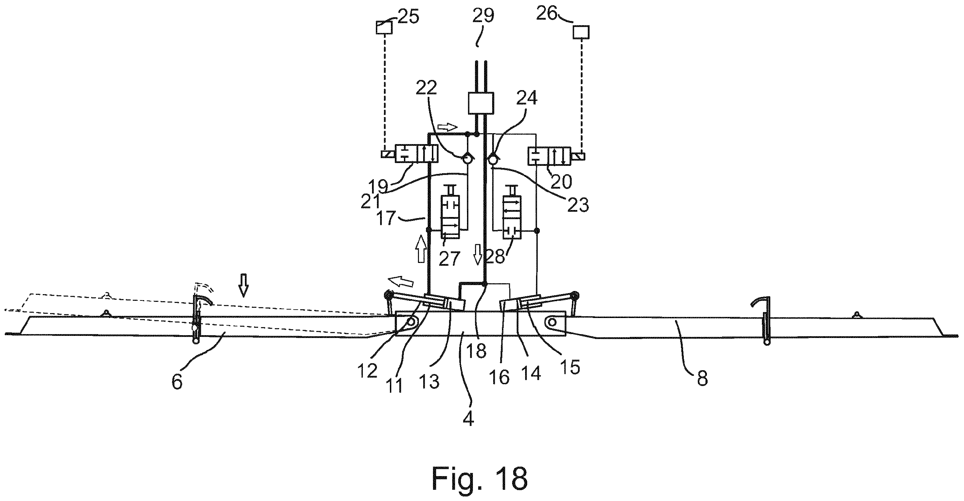

Fig. 17 and 18 show a situation where the first side boom 6 is to be lifted or lowered, while the second side boom 8 remains in place. In this case the second shutoff valve 20 and the fourth shutoff valve 28 are closed. The first shutoff valve 19 and the third shutoff valve 27 are open. By using the work machine's external hydraulics 29, only the first side boom 6 can be lifted (Fig. 17) or lowered (Fig. 8), depending on the feed direction of the external hydraulics.

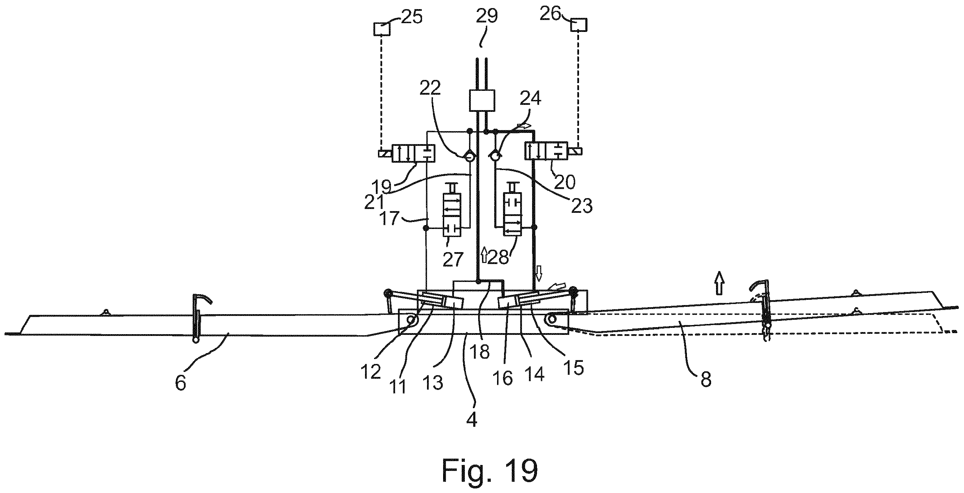

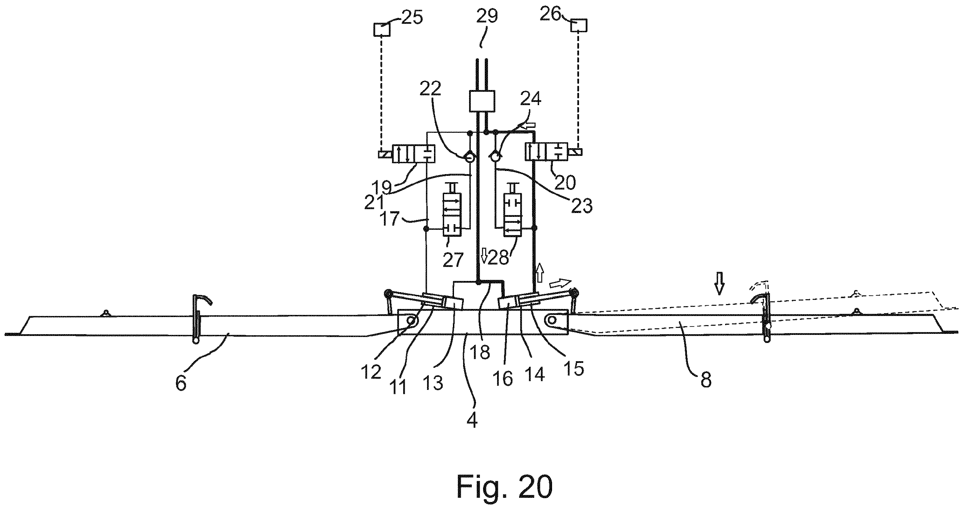

Fig. 19 and 20 show a situation where the second side boom 8 is to be lifted or lowered, while the first side boom 6 remains in place. In this case the first shutoff valve 19 and the third shutoff valve 27 are closed. The second shutoff valve 20 and the fourth shutoff valve 28 are open. By using the work machine's external hydraulics 29, only the second side boom 8 can be lifted (Fig. 19) or lowered (Fig. 20), depending on the feed direction of the external hydraulics.

In manual control of the tilt function, i.e. the mode of operation of Fig. 7 and 9, the shutoff valves 19 and 20 are controlled electrically (12 or 24v) by means of a 1-0-1 type rocker switch provided in the cab of the work machine. The electrically controlled shutoff valves 19 and 20 are in this case of the type; basic position = open.

When using a 1-1-1 type manual control selector switch, it may be selected in the centre position by a separate 1-0 switch whether the shutoff valves 19 and 20 are in the centre position of the selector switch open (floating position) or closed (locked position). In the locked position, the positions of the side booms 6 and 8 remain unchanged.

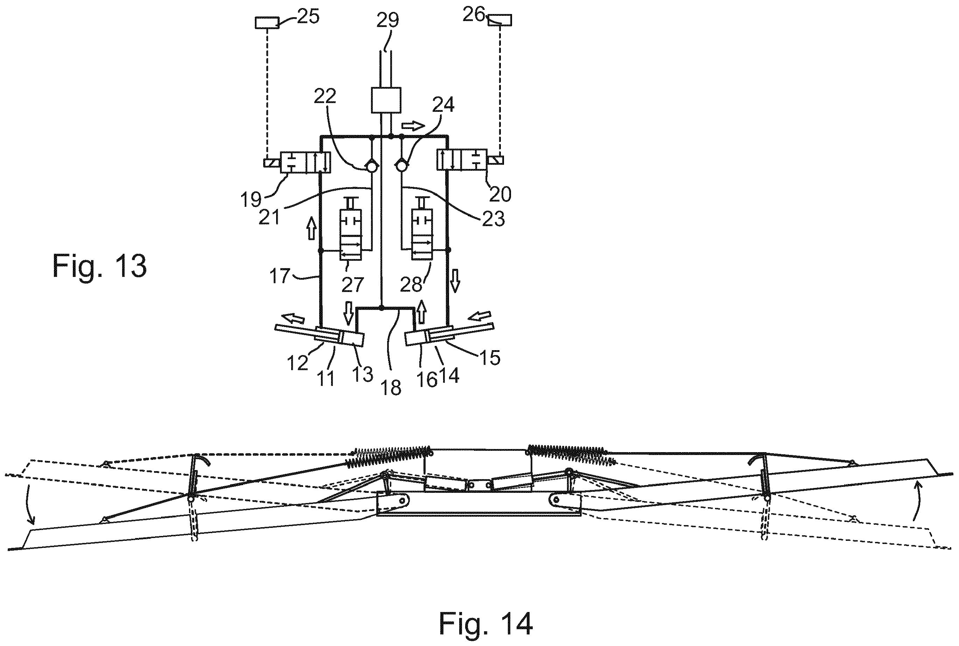

In the floating position (Fig. 11 and 13) the double-acting control hydraulics operated from the cab of the work machine changes the mutual position of the side booms 6 and 8, i.e. both of the side booms are lifted or lowered at the same time.
In addition to the selector switch provided in the cab, the electric shutoff valves 19 and 20 can be controlled automatically by means of sensors installed at the outer ends of the side booms 6 and 8, such that their 0 - 1 information may be based on a radar signal, a current monitoring relay (electric motor drives) or a mechanical limit switch for example based on the ground contact of a support leg.

By automatizing the tilt function, the driver is able to better focus e.g. on observing the driving lines and height adjustment of the work machine, thus being able to increase the working speed. The height position of the tips of the side booms 6, 8 is thus adjusted correspondingly despite, for example, the changes of the ground surface features of a standing crop or tilting of the work machine.

By providing the bypass pipelines 21 and 23 with adjustable choke valves, instead of or in addition to the shutoff valves 27 and 28, partly separate controllability can be achieved in the controls of the side booms in the lifting direction without switching off the passive tilt function.

The undesirable swinging movement of the boom arrangement due to swaying of the work machine can be reduced in the locked state of the side booms 6, 8 by installing suitable hydraulic accumulators 49, 50 (Fig. 7) in the pipe sections of the first pipeline 17 between the first shutoff valve 19 and the first hydraulic cylinder 11, and the second shutoff valve 20 and the second hydraulic cylinder 14. Hydraulic accumulator damping may also reduce stress on the boom arrangement and the hydraulic system.

The system provides, through a relatively simple electro-hydraulic connection, a number of features and functions which, when working on an uneven surface, markedly facilitate the accurate adjustment and controllability of the boom arrangement as compared to the basic hydraulic connection provided with up - down functions of the side booms. The system does not require its own continuous hydraulic circulation, which reduces the manufacturing and operating costs. Connecting the boom arrangement to the work machine is quicker, as several external pairs of hydraulic hoses and/or a cardan shaft are not needed.

The invention is not limited merely to the examples of its embodiments described above; instead, many variations are possible within the scope of the inventive idea defined by the claims.

## Claims

1. A boom arrangement (1) adapted to be connected to a supplementary equipment connection (3) of a work machine (2), the boom arrangement extending, during operation, substantially transversely relative to the forward-moving direction of the work machine, the boom arrangement (1) comprising
- a centre body (4) having connection means (5) which are releasably connectable to the supplementary equipment connection (3) of the work machine, such that the centre body is substantially rigidly attached relative to the work machine, the centre body thus following the swaying of the work machine,
- a first side boom (6) on a first side (I) of the centre body, the first side boom being pivotably mounted to the centre body to turn in the vertical direction about a first joint (7),
- a second side boom (8) which is identical to the first side boom and provided on a second side (II) of the centre body symmetrically relative to the first side boom, the second side boom being pivotably mounted to the centre body to turn in the vertical direction about a second joint (9),
- a hydraulic system (10) for controlling the movements of the side booms, the hydraulic system comprising
-- a double-acting first hydraulic cylinder (11) arranged between the centre body (4) and the first side boom (6) for turning the first side boom, the first hydraulic cylinder (11) having a first side (12) on the side of the piston rod and a second side (13) opposite to the side of the piston rod,
-- a double-acting second hydraulic cylinder (14) arranged between the centre body (4) and the second side boom (8) for turning the second side boom, the second hydraulic cylinder (14) having a third side (15) on the side of the piston rod and a fourth side (16) opposite to the side of the piston rod,
-- a first pipeline (17) through which the first side (12) of the first hydraulic cylinder (11) is connected in flow communication with the third side (15) of the second hydraulic cylinder (14), and
-- a second pipeline (18) through which the second side (13) of the first hydraulic cylinder (11) is connected in flow communication with the fourth side (16) of the second hydraulic cylinder (14), **characterized in that** the hydraulic system (10) comprises
- an electrically controlled first shutoff valve (19) arranged in the first pipeline (17), which in an open state allows and in a closed state prevents the flow of hydraulic fluid to the first side (12) and, correspondingly, from the first side (12) of the first hydraulic cylinder (11),
- an electrically controlled second shutoff valve (20) arranged in the first pipeline (17), which in an open state allows the flow of hydraulic fluid to the third side (15) and, correspondingly, from the third side (15) of the second hydraulic cylinder (14),
- a first bypass pipeline (21) connected to the first pipeline (17) for bypassing the first shutoff valve (19), such that when the first shutoff valve is closed, the flow of hydraulic fluid is directed through the first bypass pipeline,
- a first check valve (22) arranged in the first bypass pipeline (21) for allowing the flow of hydraulic fluid to the first side (12) of the first hydraulic cylinder (12) and for preventing the flow in the opposite direction,
- a second bypass pipeline (23) connected to the first pipeline (17) for bypassing the second shutoff valve (20), such that when the second shutoff valve is closed, the flow of hydraulic fluid is directed through the second bypass pipeline, and
- a second check valve (24) arranged in the second bypass pipeline (23) for allowing the flow of hydraulic fluid to run to the third side (15) of the second hydraulic cylinder (14) and for preventing the flow in the opposite direction,
and that the boom arrangement comprises at least one electric operating switch (25, 26) arranged in the cab of the work machine to be operated by the driver of the work machine, for opening and closing the electrically controlled first shutoff valve (19) and second shutoff valve (20).

2. The boom arrangement according to claim 1, **characterized in that** the hydraulic system (10) comprises
- a third shutoff valve (27) arranged in the first bypass pipeline (21), and
- a fourth shutoff valve (28) arranged in the second bypass pipeline (23).

3. The boom arrangement according to claim 1 or 2, **characterized in that** the first pipeline (17) and the second pipeline (18) are connected to a double-acting hydraulic connection of the work machine's external hydraulics (29) for operating the first hydraulic cylinder (11) and/or the second hydraulic cylinder (14) by means of the work machine's hydraulics.

4. The boom arrangement according to any one of claims 1 - 3, **characterized in that** the boom arrangement (1) comprises
- a first extension spring device (30) arranged to operate between the centre body (4) and the first side boom (6), and
- a second extension spring device (31) which is identical to the first extension spring device and arranged to operate between the centre body (4) and the second side boom (8).

5. The boom arrangement according to any one of claims 1 - 4, **characterized in that** the first side boom (6) and the second side boom (8) consist of two or more boom sections that are foldable relative to each other.

6. The boom arrangement according to any one of claims 1 - 5, **characterized in that** the first side boom (6) comprises a first boom section (32) pivotably mounted to the centre body (4) to turn in the vertical direction about said first joint (7), and a second boom section (33) pivotably mounted by a third joint (34) to the end of the first boom section (32) to turn between an extended position (A) and a folded position (B), in which extended position (A) the first and the second boom sections are aligned end against end, one after the other, and in which folded position (B) the second boom section (33) is folded next to the first boom section (32).

7. The boom arrangement according to any one of claims 1 - 6, **characterized in that** the second side boom (8) comprises a third boom section (35) pivotably mounted to the centre body (4) to turn in the vertical direction about said second joint (9), and a fourth boom section (36) pivotably mounted by a fourth joint (37) to the end of the third boom section (35) to turn between the extended position (A) and the folded position (B), in which extended position (A) the third and the fourth boom sections are aligned end against end, one after the other, and in which folded position (B) the fourth boom section (36) is folded next to the third boom section (35).

8. The boom arrangement according to any one of claims 1 - 7, **characterized in that** the boom arrangement (1) comprises
- a crank (38) pivotably mounted to the centre body (4) to turn about a fifth joint (39), and
- a power device operated turning mechanism (40) for turning the crank back and forth,
and that the first hydraulic cylinder (11) and the second hydraulic cylinder (14) are pivotably mounted to the crank (38) at a distance from the fifth pivot (39).

9. The boom arrangement according to any one of claims 1 - 8, **characterized in that** the boom arrangement (1) comprises a plurality of cutting devices (41), such as trimmers, arranged over the width of the boom arrangement.

10. The boom arrangement according to any one of claims 1 - 8, **characterized in that** the boom arrangement (1) comprises a plurality of spraying nozzles (42) arranged over the width of the boom arrangement (1) for spraying liquid.

11. A method for adjusting the tilt position of the first side boom (6) and the second side boom (8) of the boom arrangement (1) attached to a work machine according to any one of claims 1 - 10, **characterized in that**
- the hydraulic system (10) is operated as a closed circuit,
- successive pulses of hydraulic fluid flow are generated in the hydraulic system (10),
- either the first shutoff valve (19) or the second shutoff valve (20) is closed, the other one remaining in the open state, such that the flow of hydraulic fluid runs in only one direction in the first pipeline (17) through the bypass flow channel (21 or 23) bypassing the shutoff valve that is closed, the check valve (22 or 24) in said bypass flow channel preventing the fluid flow in the opposite direction, whereby the side booms (6, 8) are turned, and
- the closed first shutoff valve (19) or second shutoff valve (20) is opened, or both of the shutoff valves (19 and 20) are closed, when the side booms have turned to the desired tilt angle.

12. The method according to claim 11, **characterized in that** the work machine is driven on an uneven ground surface, such as a field, such that the work machine and thereby the centre body (4) are swaying, whereby the pulses of flow of the hydraulic fluid in the hydraulic system (10) are generated from the movements of the work machine, as the moment of inertia of the side booms (6, 8) prevents/delays them from following the sudden movements of the centre body (4), whereby successive swaying in different directions generates said pulses of hydraulic fluid flow through movement of the piston rod of the first and the second hydraulic cylinders.

13. The method according to claim 12, **characterized in that** the swaying of the work machine (2) is intensified by means of a band (44) installed at one or more positions of a tyre (43) of the work machine or by adjusting the inflation pressure of the tyres.

14. The method according to claim 12 or 13, **characterized in that** pulses of flow of the hydraulic fluid are generated mechanically by moving the fixing points of the first and the second hydraulic cylinders (11, 14) back and forth relative to the centre body (4), or by making quick boom adjusting movements back and forth.
